# EUROPEAN PATENT SPECIFICATION

(11) **EP 2 954 717 B1**
(45) Date of publication and mention of the grant of the patent: **14.03.2018**
(21) Application number: 14700086.3
(22) Date of filing: 07.01.2014
(51) Int. Cl.: H04W 24/02, H04L 29/06, H04W 72/04, H04W 24/10, H04W 12/08, H04W 84/04

(54) **AUTOMATIC CELL PARAMETER CONFIGURATION OF AN ACCESS POINT**
AUTOMATISCHE ZELL-PARAMETERKONFIGURATION EINES ZUGANGSKNOTENS
CONFIGURATION AUTOMATIQUE DE PARAMÈTRES DE CELLULES D'UN POINT D'ACCÈS

(30) Priority: 08.01.2013 GB 201300244
(43) Date of publication of application: 16.12.2015
(73) Proprietor: ip.access Limited, Cambridge CB23 6DW (GB)
(72) Inventor: AWAD, Akram Jamal Masoud, Cambridge Cambridgeshire CB23 5DU (GB); PIERCY, Neil Philip, Herts Cambridgeshire SG8 7RE (GB)
(74) Representative: Optimus Patents Limited
(86) International application number: PCT/EP2014/050134
(87) International publication number: WO 2014/108390

(56) References cited:
- WO-A1-03/036815
- US-A1- 2012 030 734
- US-A1- 2012 046 026

## Description

### Field of the invention

The field of this invention relates to network elements, a wireless communication system and methods therefor.

### Background of the Invention

Wireless communication systems, such as the 3^{rd} Generation (3G) of mobile telephone standards and technology, are well known. An example of such 3G standards and technology is the Universal Mobile Telecommunications System (UMTS™), developed by the 3^{rd} Generation Partnership Project (3GPP™) (www.3gpp.org). The 3^{rd} generation of wireless communications has generally been developed to support macro-cell mobile phone communications. Such macro cells utilise high power base stations (NodeBs in 3GPP parlance) to communicate with wireless communication units within a relatively large geographical coverage area. Typically, wireless communication units, or User Equipment (UEs) as they are often referred to in 3G parlance, communicate with a Core Network (CN) of the 3G wireless communication system via a Radio Network Subsystem (RNS). A wireless communication system typically comprises a plurality of radio network subsystems, each radio network subsystem comprising one or more cells to which UEs may attach, and thereby connect to the network. Each macro-cellular RNS further comprises a controller, in a form of a Radio Network Controller (RNC), operably coupled to the one or more Node Bs, via a so-called lub interface.

The second generation wireless communication system (2G), also known as GSM, is a well-established cellular, wireless communications technology whereby "base transceiver stations" (equivalent to the Node B's of the 3G system) and "mobile stations" (user equipment) can transmit and receive voice and packet data. Several base transceiver stations are controlled by a Base Station Controller (BSC), equivalent to the RNC of 3G systems.

Communications systems and networks are developing towards a broadband and mobile system. The 3rd Generation Partnership Project has proposed a Long Term Evolution (LTE) solution, namely, an Evolved Universal Mobile Telecommunication System Territorial Radio Access Network, (E-UTRAN), for a mobile access network, and a System Architecture Evolution (SAE) solution, namely, an Evolved Packet Core (EPC), for a mobile core network. An evolved packet system (EPS) network provides only packet switching (PS) domain data access so voice services are provided by a 2G or 3G Radio Access Network (RAN) and circuit switched (CS) domain network. User Equipment UE) can access a CS domain core network through a 2G/3GRAN such as the (Enhanced Data Rate for GSM Evolution, EDGE) Radio Access Network (GERAN) or a Universal Mobile Telecommunication System Terrestrial Radio Access Network (UTRAN), and access the EPC through the E-UTRAN.

Some User Equipments have the capability to communicate with networks of differing radio access technologies. For example, a User Equipment may be capable of operating within a UTRAN and within an E-UTRAN.

Lower power (and therefore smaller coverage area) cells are a recent development within the field of wireless cellular communication systems. Such small cells are effectively communication coverage areas supported by low power base stations. The terms "picocell" and "femtocell" are often used to mean a cell with a small coverage area, with the term femtocell being more commonly used with reference to residential small cells. Small cells are often deployed with minimum RF (radio frequency) planning and those operating in consumers' homes are often installed in an *ad hoc* fashion. The low power base stations which support small cells are referred to as Access Points (AP's) with the term Home Node B (HNB's) or Evolved Home Node B (eHNB) identifying femtocell Access Points. Each small-cell is supported by a single Access Point. These small cells are intended to augment the wide area macro network and support communications to multiple User Equipment devices in a restricted, for example, indoor environment. An additional benefit of small cells is that they can offload traffic from the macro network, thereby freeing up valuable macro network resources An HNB is an Access Point that provides a wireless interface for User Equipment connectivity. It provides a radio access network connectivity to a User Equipment (UE) using the so-called luh interface to a network Access Controller, also known as a Home Node B Gateway (HNB-GW). One Access Controller (AC) can provide network connectivity of several HNB's to a core network.

Typical applications for such Access Points include, by way of example, residential and commercial locations, communication 'hotspots', etc., whereby Access Points can be connected to a core network via, for example, the Internet using a broadband connection or the like. In this manner, small cells can be provided in a simple, scalable deployment in specific in-building locations where, for example, network congestion or poor coverage at the macro-cell level may be problematic.

Thus, an AP is a scalable, multi-channel, two-way communication device that may be provided within, say, residential and commercial (e.g. office) locations, 'hotspots' etc, to extend or improve upon network coverage within those locations. Although there are no standard criteria for the functional components of an AP, an example of a typical AP for use within a 3GPP 3G system may comprise Node-B functionality and some aspects of Radio Network Controller (RNC) functionality as specified in 3GPP TS 25.467. These small cells are intended to be able to be deployed alongside the more widely used macro-cellular network and support communications to UEs in a restricted, for example 'in-building', environment.

Herein, the term "small cell" means any cell having a small coverage area and includes "picocells" and "femtocells."

A UE may attempt to "attach" or "camp on" to an Access Point or a node B through the transmission and reception of attachment signalling. Such signalling can typically include a Location Area Update and/or Routing Area Update Message. When an attachment attempt is successful, the UE is allowed onto the small cell served by the particular AP and incoming communications traffic (eg voice and/or data) are paged and routed to the UE through the AP. Also, once attached to the cell, the UE may be requested by the AP (or node B) to send measurement reports to the AP. Examples of such measurement reports may comprise power level and quality measurements of signals being broadcast by the Access Points and node B's of neighbouring cells. One particular example of a broadcast signal in a UMTS network is the so-called Common Pilot CHannel (CPICH). The CPICH comprises a known bit sequence that can be discovered by User Equipment (UE) within the cell as a phase reference for other channels and to obtain measurements for that cell.

Typically, a CPICH is broadcast with a transmit power of around 10% of the total available transmit power for that cell and the transmit powers of other common control channels are normally set to be proportional to CPICH transmit power. Conventionally, the CPICH power of a macrocell Node B is configured according to network and cell planning, and in particular according to a required cell coverage area. However, due to the more *ad hoc* nature in which small cells may be deployed, such cell planning is not feasible for AP's serving small cells. One known proposal for assisting in configuring a CIPCH transmit power relies on the AP scanning for, receiving and measuring transmissions from macrocell node B's and small cell Access Points (eg. HNB's) in a manner that is termed Network Listen. Using such techniques, setting the CPICH power of a small cell AP comprises adaptively adjusting its CPICH power based on information about neighbouring cells obtained using Network Listen. Applicant's co-pending disclosure GB-A-2464259 describes an alternative arrangement for configuring a CPICH power level in a particular cell based on quality measurements relating to the CPICH of the cell which are received and reported by a UE which is on a "whitelist" of authorised users for that cell.

Small cells are generally divided into open access, closed access, and hybrid access cells. Macrocells may be similarly divided but are typically open access. In closed access small cells, a "whitelist" of authorised users is defined and stored in the Access Point, the Access Controller or an Access Point Management System (AMS). This whitelist allows the small cell system to decide which users can receive services from the individual Access Points. The list can also help the small cell system to learn the behaviour of subscribers and of system characteristics, such as the times of the day that the UEs are attached to a cell and active with sessions, and the radio path loss to the UEs at these times. As mentioned above, this information can then be used to self-optimise the main radio parameters which affect coverage (e.g. CPICH power). Closed access cells are usually of residential nature where the whitelist contains the IMSI (International Mobile Subscriber Identity) identities belonging to the subscriptions of the household residents. Closed access cells can also be deployed in small or medium sized enterprise environments in which a limited number of users are given exclusive access to the cell.

In contrast, open access cells do not require a whitelist to operate as access for all users subscribed to the network is allowed (subject to resource availability and operating policies such as load control.)

A hybrid cell is part way between these two extremes: a list of "preferred" users is maintained (just as for the closed access cells), and these users are given preference to resources, but all other users are also allowed to use the cells if the resources are not needed for the preferred users. There is no formal specification in the 3GPP standards at present of exactly how much preference should be given over what resources to the preferred users, but in principle it could be anywhere between the open and closed extremes, depending on cell capability and operator policy. However, UE's are paged only in those cells to which they are allowed access.

In some open access cell deployments, and most hybrid access deployments, an intended coverage area is desired for the access point even though all users have equal access rights to it. As these small cells are rarely able to be planned accurately using standard cell planning tools, reliance is made on self-optimisation features of these small cells to optimise their coverage.

An example of such a deployment (which may be open or hybrid access) is that of an Access Point deployed by a company or Operator in their store or showroom where coverage is only desired within the store either to avoid capacity leakage outside the store or to avoid unnecessary interference on other cells outside the intended coverage area. Another example is that of a cell installed in a large office environment where the installation is intended to serve employees in a specific part of the building and avoiding as much usage by others in surrounding offices or areas is desirable. A third example is that of a dense open access cell deployment in which cells are deployed in large volumes without coverage planning (e.g. multiple companies in the same building) and interference reduction between those access points is sought.

Current methods for configuring Access Point parameters in open access cells rely on the use of pre-defined parameter values or by having their parameters manually configured following an AP-by-AP measurement and assessment campaign. Such parameters may relate to CPICH power, maximum total power and handover processes, for example. In other deployments, an AP may be allowed to use some centralised or distributed SON (self- organising network) functionalities to configure its parameters, such as the use of the Network Listen function mentioned above, in order to measure interference from surrounding cells and setting its own power levels accordingly.

In many such cases, the intended coverage area is also an area which a number of users are also commonly operating within, i.e. employees within a shop or office. By not having a dedicated whitelist for these subscribers however, an open access cell cannot identify whether it is providing appropriate coverage to the intended area. US2012/046026 describes using the measurement reports from UEs that are being served by other cells. 2012/030734A1 describes use of information from an owner of a femto cell to automatically and dynamically determine the access control list of a closed access femto cell

### Summary of the invention

Accordingly, the invention seeks to mitigate, alleviate or eliminate the above-mentioned disadvantage. Aspects of the invention provide signal processing apparatus, a wireless communication system and methods therefor as described in the appended claims.

According to a first aspect of invention there is provided a method for configuring operating parameters of an access point for providing communications services to at least one user of a wireless communication unit, the method comprising, configuring the access point to serve an open access cell, storing an access cell-specific preferred user list, receiving measurement reports from at least one wireless communication unit located within the serving open access cell, identifying those measurement reports that are received from wireless communication units that are served by the open access cell and that are included in the access cell-specific preferred user list, and using the identified measurement reports to configure the operating parameters of the access point.

The access point may be a Home Node B or extended Home Node B, for example. The open access cell served by the access point may be any type of small cell, eg. picocell or femtocell.

In one example, members of the access cell-specific preferred user list may be users which the access point is intended to serve (e.g. employees of an office).

In another embodiment, members of the preferred user list may be users who are expected to be in a coverage area of the open access cell served by the access point during a period of access point activity and whose mobility covers some or all of the cell's coverage area (e.g. sales people serving in a store or showroom).

In one embodiment, the preferred user list may be created **by** a manual process. This process may be preferred when a pre-determined set of targeted users is known, eg. employees of an office. If manually created, the preferred user list may, conveniently, be stored in an access controller or an access point via a management system.

In another embodiment, the preferred user list may be created by an automated process in which an access point collects attachment history information of wireless communication units and uses the information to create a list of the most frequently attaching wireless communication units which are most likely to be within a desired coverage area of the open access cell. In such a case, the method may further include monitoring a behaviour of wireless communication units which attach themselves to the access point and selecting only those wireless communication units which meet at least one pre-defined behaviour criterion for inclusion in the preferred user list.

One example of a behaviour of a wireless communication unit may be the length of time a wireless communication unit is continuously "camped onto" (or attached) to the access point. This may be ascertained, for example, from the number of location update messages received by the access point from a particular wireless communication unit. A specified number of updates or an attachment time period may be set as a pre-defined behaviour criterion so that those wireless duplication units which meet such a criterion qualify for inclusion in the preferred user list. Another example of a wireless communication unit behaviour is its response to being paged. For example, a wireless communication unit which responds to pages during a continuous time period of several hours may be deemed to qualify for inclusion in the preferred user list. Further examples of wireless communication behaviour are powering on and off whilst in the open access cell or making regular active sessions or calls while in the open access cell. Monitoring the behaviour of wireless communication units may be limited to certain times of day. In the examples of an office or retail store environment this monitoring period may exclude lunch or rest breaks.

The invention has the advantage of also permitting an access point to learn when busy times will occur, thereby enabling the access point to ramp up its transmission power at such times in order to cope with the expected load. Conversely, knowing when quiet times will occur permits the access point to ramp down its transmissions thereby lessening the likelihood of causing interference on neighbouring cells.

In another embodiment, the creation of the preferred user list can be a semi-automated process in which an access point collects attachment history information of wireless communication units which attach to the open access cell and then manually compiles the preferred user list using, at least in part, the information collected by the access point.Hence, the invention defines a special-interest user group for an open access cell. The invention further permits filtering of information reported by wireless communication units for use in identifying an access point's surrounding RF environment and desired coverage area range and characteristics.

The advantage of using measurement reports received from wireless communication units which are included in the preferred user list in order to configure an access point's operating parameters (such as CPICH power, for example), rather than using measurement reports from other wireless communication units, can be appreciated from consideration of the following example. Consider a small cell which covers a retail store. Members of the public, carrying User Equipments, may go past and in and out of the store and so will "hand in" (e.g. from a neighbouring macrocell) and then "hand out" of the small cell comparatively quickly. Taking measurement reports from these users into account is likely to result in configuring the small cell to be larger than it needs to be (i.e. extending it beyond the confines of the store). On the other hand, configuring the operating parameters so that User Equipments belonging to employees rarely need to hand out to a neighbouring cell is likely to result in the coverage area being optimum (ie. confined to the store and extending no further).

According to a second aspect of the invention, there is provided signal processing apparatus for configuring operating parameters of an access point configured to serve an open access cell and for providing communications services to at least one user of a wireless communication unit, the signal processing apparatus being arranged to receive measurement reports from at least one wireless communication unit located within the serving open access cell, identify those received measurement reports that are received from wireless communication units that are served by the open access cell and that are included in an access cell-specific preferred user list, and use the identified measurement reports to configure the operating parameters of the access point.

According to a third aspect of the invention there is provided a processing module for compiling an access cell-specific preferred user list, the processing module being arranged to monitor behaviour of wireless communication units that attach themselves to an access point serving an open access cell and wherein the processing module is further arranged to select only those wireless communication units that are served by the open access cell and that meet at least one pre-defined behaviour criterion for inclusion in the access cell-specific preferred user list.

The functionality of the signal processing apparatus may be implemented in one or more integrated circuits. Similarly the functionality of the processing module may be implemented in one or more integrated circuits. Furthermore, the signal processing apparatus and processing module may be incorporated together in one device. The functionality of the signal processing apparatus may be distributed between two or more network elements.

The signal processing apparatus may be included in the access point or alternatively, it may be located in some remote network element such as an access controller (Home Node B Gateway, for example) or an access point management system or any other network element which is in communication with the access point. The preferred user list may be stored in a memory which may be co-located with the signal processing apparatus or stored in some other network element to which the signal processing apparatus has access. For example, the memory may be located in an access point, access controller or access point management system.

The processing module may be included in the access point or some other network element which is in communication with the access point, for example, an access controller or access point management system.

The preferred user list may comprise identities of individual wireless communication units. Such identities may be, for example, the IMSI or MSISDN (Mobile Station International Subscriber Directory Number) associated with a wireless communication unit.

In one embodiment, where the signal processing apparatus' function is distributed between an access point and its access controller, each time a UE requests access to an access point, the access point checks with its access controller if the UE is included in the preferred user list and sets a flag against those UE's which are included. Subsequently, each time the access point receives a measurement from a UE (e.g. via a measurement report message or as part of another message) the access point checks if the reporting UE is flagged as a member of the preferred user list. Then, based on a pre-defined policy, the access point or an associated management system uses the information contained within the measurement reports from the preferred user listed UEs to define or update CPICH power to cover a desired coverage area for the cell served by the access point.

According to a fourth aspect of the invention there is provided a wireless communication system comprising the signal processing apparatus of the second aspect and the processing module of the third aspect. According to a fifth aspect of the invention, there is provided tangible computer program product having an executable computer program code stored thereon for execution by a processor to perform a method in accordance with the first aspect.

The tangible computer program product may comprise at least one from a group consisting of: a hard disk, a CD-ROM, an optical storage device, a magnetic storage device, a Read Only Memory, a Programmable Read Only Memory, an Erasable Programmable Read Only Memory, an Electrically Erasable Programmable Read Only Memory and a Flash memory.

These and other aspects, features and advantages of the invention will be apparent from, and elucidated with reference to, the embodiments described hereinafter.

### Brief Description of the Drawings

Further details, aspects and embodiments of the invention will be described, by way of example only, with reference to the drawings. Elements in the figures are illustrated for simplicity and clarity and have not necessarily been drawn to scale. Like reference numerals have been included in the respective drawings to ease understanding.
FIG. 1 illustrates a part of a wireless communication system operating in accordance with an example embodiment, and
FIG. 2 is a flow chart of an example of operation of the example of FIG. 1.

### Detailed Description

Those skilled in the art will recognize and appreciate that the specifics of the specific examples described are merely illustrative of some embodiments and that the teachings set forth herein are applicable in a variety of alternative settings. For example, since the inventive concepts do not depend on any particular radio access technology, it is envisaged that the inventive concepts can be applied to 2G, 3G or LTE systems. Furthermore, other alternative implementations within cellular communication systems conforming to different standards are contemplated and are within the scope of the various teachings described.

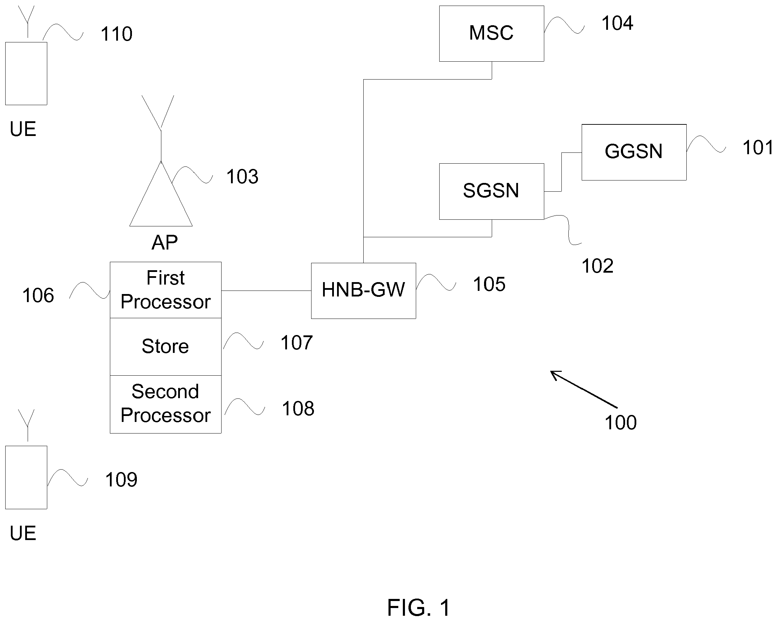

A core network of the Wireless Communications System of FIG.1 includes a Gateway General Packet Radio System (GPRS) Support Node (GGSN) 101 and a Serving GPRS Support Node (SGSN) 102. The GGSN 101 or SGSN 102 is responsible for interfacing the wireless communication system 100 with a packet data network, for example a Public Switched Data Network (PSDN), (such as the internet) or a Public Switched Telephone Network (PSTN). The SSGN 102 performs a routing and tunnelling function for traffic to and from a cell while the GGSN 101 links with external packet networks.

An Access Point (AP) 103, which provides communication services in an open access cell, is linked to the SSGN 102 and to a Mobile Switching Centre (MSC) 104 through a Home Node B Gateway (HNB-GW) 105. The Access Point 103 is provided with a first processor 106, a store 107 and a second processor 108 whose functionalities will be described below. Either or both processors 106, 108 may be programmed by a computer program product such as a flash memory which is incorporated in the Access Point 103.

The open access cell served by the Access Point 103 covers an area of a retail store (not shown)

A first User Equipment 109 is currently located within the open access cell, is able to camp onto the Access Point 103 and belongs to an employee working in the retail store. A second User Equipment 110 is also currently located within the open access cell, is capable of camping onto the Access Point 103 and belongs to a customer of the retail store.

In one example of operation, the AP 103 learns a set of targeted users by collecting and storing information about the attachment or visitation history of UEs and by selecting UEs above a certain attachment frequency for inclusion in a preferred user list. The creation of the preferred user list may, alternatively, be a semi-automated process in which attachment history information is collected by the AP 103 and the information is then used to create the list manually. The storage of the attachment history information and the compiled list may be held in a storage module 107 in the AP 103 or may be held in a centralised storage module in another network entity, (HNB-GW 105 or Access Point Management System (not shown) for example). Likewise, the automatic processing of the attachment information can either be done in an AP 103 or can be performed by a centralised processing unit in another network entity such as the HNB-GW 105 or an Access Point Management System. The storage of the manually or automatically created preferred user list can either be held in the store 107 in the AP 103 or can be concentrated in a centralised storage module in another network entity (HNB-GW 105 or Access Point Management System).

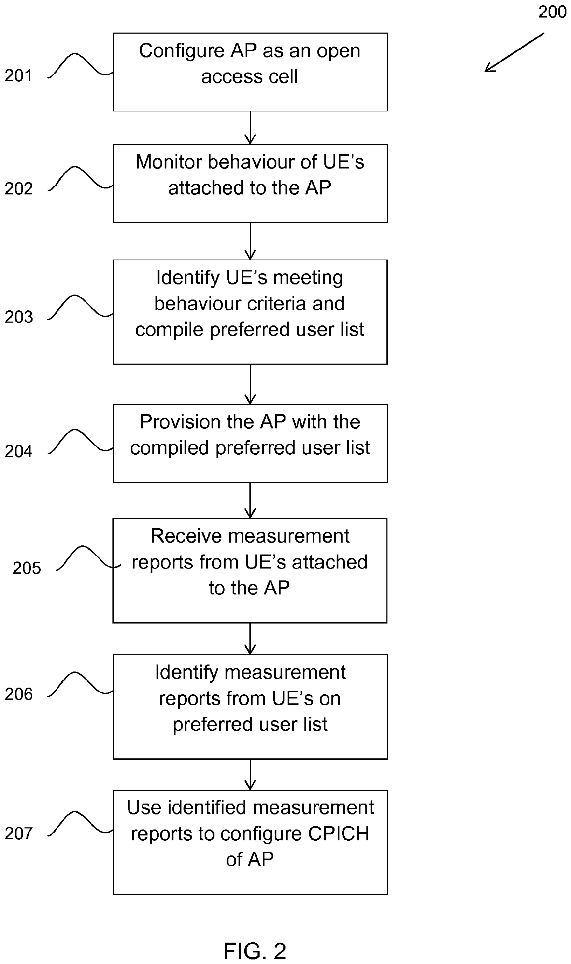

Referring now to the simplified flowchart of FIG.2, a method 200 of configuring a CPICH of the Access Point 103 of FIG. 1 will now be described.

At 201, the HNB-GW 105 configures the Access Point (AP) 103 as an open access cell.

At 202, the first processor 106 in the Access Point 103 monitors the behaviour of any User Equipment (UE) 109, 110 which camps onto the Access Point 103. For example, the employee-owned UE 109 remains powered-on for the entire working day and sends regular location updates to the Access Point 103, as is conventional. The first processor 106 monitors the number of location update messages (which are numerous) received during this period of power-on. The UE 110 which belongs to a customer spends a much shorter period of time in the open access cell however. The first processor 106 records just one location update from the customer-owned UE 110 during the entire working day.

At 203 the first processor 106 identifies those UE's from which the AP 103 has received a pre-defined number of location updates (or in excess of the pre-defined number) and at 204, stores the identities of such UE's in the store 107 as a preferred user list. In this example, it is determined that a minimum number of location updates received from the employee-owned UE 109 is exceeded and so the IMSI of this UE is added to the preferred user list held in the store107. The customer-owned UE 110 is not added to the preferred user list however because too few location updates are received from this particular UE.

Many more UE's attaching themselves to the AP 103 may be monitored and added to the preferred user list or not, as appropriate.

In an alternative embodiment, steps 202, and 203 may be omitted and the preferred user list may be compiled manually as part of or subsequent to the initial provisioning of the AP 103.

At 205, measurement reports from any UE attached to the AP 103 along with the IMSI of the UE are received by the second processor 108 in the AP 103. Such measurement reports may typically include power levels and signal quality of broadcast transmissions from neighbouring cells (Not shown).

The second signal processor 108 and 206 identifies those measurement reports which have been sent by UE's which are on the preferred user list (such as UE 109 which is owned by an employee of the retail store). In this way, the AP 103 exploits preferred users and in particular, RF measurements received therefrom in order to learn the RF characteristics of the surrounding area.

At 207, the second processor 108 uses the identified measurement reports to configure a CPICH transmission power level for the AP 103 using conventional techniques.

In addition to optimising CPICH power, other transmission channel power levels for the AP 103 can be configured using the measurement reports received from UE's in the preferred user list. Optimised power levels ensure adequate coverage of the intended coverage area. eg. an area enclosed by the perimeter of the retail store .with .minimal leakage beyond the confines of the retail store.

Handover parameters and cell selection parameters are further examples of parameters which can be configured using the principles of the invention.

The signal processing functionality of the embodiments of the invention, particularly the first processor 106 and the second processor 108 may be achieved using computing systems or architectures known to those who are skilled in the relevant art. Computing systems such as, a desktop, laptop or notebook computer, hand-held computing device (PDA, cell phone, palmtop, etc.), mainframe, server, client, or any other type of special or general purpose computing device as may be desirable or appropriate for a given application or environment can be used. The computing system can include one or more processors which can be implemented using a general or special-purpose processing engine such as, for example, a microprocessor, microcontroller or other control module.

The computing system can also include a main memory, such as random access memory (RAM) or other dynamic memory, for storing information and instructions to be executed by a processor. Such a main memory also may be used for storing temporary variables or other intermediate information during execution of instructions to be executed by the processor. The computing system may likewise include a read only memory (ROM) or other static storage device for storing static information and instructions for a processor.

The computing system may also include an information storage system which may include, for example, a media drive and a removable storage interface. The media drive may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media may include, for example, a hard disk, floppy disk, magnetic tape, optical disk, CD or DVD, or other fixed or removable medium that is read by and written to by media drive. The storage media may include a computer-readable storage medium having particular computer software or data stored therein.

In alternative embodiments, an information storage system may include other similar components for allowing computer programs or other instructions or data to be loaded into the computing system. Such components may include, for example, a removable storage unit and an interface , such as a program cartridge and cartridge interface, a removable memory (for example, a flash memory or other removable memory module) and memory slot, and other removable storage units and interfaces that allow software and data to be transferred from the removable storage unit to computing system.

The computing system can also include a communications interface. Such a communications interface can be used to allow software and data to be transferred between a computing system and external devices. Examples of communications interfaces can include a modem, a network interface (such as an Ethernet or other NIC card), a communications port (such as for example, a universal serial bus (USB) port), a PCMCIA slot and card, etc. Software and data transferred via a communications interface are in the form of signals which can be electronic, electromagnetic, and optical or other signals capable of being received by a communications interface medium.

In this document, the terms 'computer program product', 'computer-readable medium' 'non-transitory computer-readable medium' and the like may be used generally to refer to tangible media such as, for example, a memory, storage device, or storage unit. These and other forms of computer-readable media may store one or more instructions for use by the processor comprising the computer system to cause the processor to perform specified operations. Such instructions, generally referred to as 'computer program code' (which may be grouped in the form of computer programs or other groupings), when executed, enable the computing system to perform functions of embodiments of the present invention. Note that the code may directly cause a processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system using, for example, removable storage drive. A control module (in this example, software instructions or executable computer program code), when executed by the processor in the computer system, causes a processor to perform the functions of the invention as described herein.

Furthermore, the inventive concept can be applied to any circuit for performing signal processing functionality within a network element. It is further envisaged that, for example, a semiconductor manufacturer may employ the inventive concept in a design of a stand-alone device, such as a microcontroller of a digital signal processor (DSP), or application-specific integrated circuit (ASIC) and/or any other sub-system element.

It will be appreciated that, for clarity purposes, the above description has described embodiments of the invention with reference to a single processing logic. However, the inventive concept may equally be implemented by way of a plurality of different functional units and processors to provide the signal processing functionality. Thus, references to specific functional units are only to be seen as references to suitable means for providing the described functionality, rather than indicative of a strict logical or physical structure or organisation.

Aspects of the invention may be implemented in any suitable form including hardware, software, firmware or any combination of these. The invention may optionally be implemented, at least partly, as computer software running on one or more data processors and/or digital signal processors or configurable module components such as FPGA devices. Thus, the elements and components of an embodiment of the invention may be physically, functionally and logically implemented in any suitable way. Indeed, the functionality may be implemented in a single unit, in a plurality of units or as part of other functional units.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

## Claims

1. A method (200) for configuring operating parameters of an access point (103) for providing communications services to at least one user of a wireless communication unit (109, 110), the method comprising:
configuring (201) the access point to serve an open access cell,
the method **characterised by**:
storing (204) an access cell-specific preferred user list,
receiving (205) measurement reports from at least one wireless communication unit located within the serving open access cell,
identifying (206) those received measurement reports that are received from wireless communication units that are served by the open access cell and that are included in the access cell-specific preferred user list, and
using (207) the identified measurement reports to configure the operating parameters of the access point.

2. The method of claim 1 wherein the access cell-specific preferred user list comprises users which the access point is intended to serve.

3. The method of claim 1 wherein the access cell-specific preferred user list comprises users who are expected to be in a coverage area of the open access cell served by the access point during a period of access point activity and whose mobility covers at least some the cell's coverage area.

4. The method of any preceding claim including creating the access cell-specific preferred user list by a manual process.

5. The method of any of claims 1 to 3 including; creating the access cell-specific preferred user list by an automated process, said process including; monitoring (202) a behaviour of wireless communication units which attach themselves to the access point and selecting (204) only those wireless communication units which meet at least one pre-defined behaviour criterion for inclusion in the access cell-specific preferred user list.

6. The method of claim 5 wherein a behaviour of wireless communication units includes one of: a length of time for which a wireless communication unit is continuously attached to the access point, a response to being paged, powering on and off of a wireless communication unit, a number of sessions made by a wireless communication unit.

7. Signal processing apparatus (106) for configuring operating parameters of an access point (103) configured to serve an open access cell and for providing communications services to at least one user of a wireless communication unit (109. 110), the signal processing apparatus **characterised in that** it is arranged to receive measurement reports from at least one wireless communication unit located within the serving open access cell, identify those received measurement reports that are received from wireless communication units that are served by the open access cell and that are included in an access cell-specific preferred user list, and use the identified measurement reports to configure the operating parameters of the access point (105).

8. A processing module (108) for compiling an access cell-specific preferred user list, (107) the processing module **characterised in that** it is arranged to monitor behaviour of wireless communication units (109, 110) that attach themselves to an access point (103) serving an open access cell by identifying measurement reports that are sent from wireless communication units included in the open access cell-specific preferred user list and that are used to configure the access point, and wherein the processing module is further arranged to select only those wireless communication units that are served by the open access cell and that meet at least one pre-defined behaviour criterion for inclusion in the access cell-specific preferred user list.

9. The signal processing apparatus (106) of claim 7 implemented in one or more integrated circuits.

10. The processing module (108) of claim 8 implemented in one or more integrated circuits.

11. A wireless communication system (100) comprising the signal processing apparatus (106) of claim 7 and the processing module (108) of claim 8.

12. A tangible computer program product (106) having an executable computer program code stored thereon for execution by a processor to perform a method in accordance with claim 1.

13. The tangible computer program product of claim 12 comprising at least one from a group consisting of: a hard disk, a CD-ROM, an optical storage device, a magnetic storage device, a Read Only Memory, a Programmable Read Only Memory, an Erasable Programmable Read Only Memory, an Electrically Erasable Programmable Read Only Memory and a Flash memory.

## Patentansprüche

1. Verfahren (200) zum Konfigurieren von Betriebsparametern eines Zugangspunkts (103) zum Bereitstellen von Kommunikationsdiensten für wenigstens einen Nutzer einer drahtlosen Kommunikationseinheit (109, 110), wobei das Verfahren Folgendes umfasst:
Konfigurieren (201) des Zugangspunkts, um eine offene Zugangszelle zu bedienen,
wobei das Verfahren **gekennzeichnet ist durch**:
Speichern (204) einer zugangszellenspezifischen bevorzugten Nutzerliste,
Empfangen (205) von Messberichten von der wenigstens einen drahtlosen Kommunikationseinheit, die sich innerhalb der bedienenden offenen Zugangszelle befindet,
Identifizieren (206) der empfangenen Messberichte, die von **durch** die offene Zugangszelle bediente drahtlose Kommunikationseinheiten empfangen worden sind, und die in der zugangszellenspezifischen bevorzugten Nutzerliste enthalten sind, und
Anwenden (207) der identifizierten Messberichte zum Konfigurieren der Betriebsparameter des Zugangspunkts.

2. Verfahren nach Anspruch 1, wobei die zugangszellenspezifische bevorzugte Nutzerliste Nutzer umfasst, die der Zugangspunkt bestimmungsgemäß bedienen soll.

3. Verfahren nach Anspruch 1, wobei die zugangszellenspezifische bevorzugte Nutzerliste Nutzer umfasst, die erwartungsgemäß während einer Periode von Zugangspunktaktivität in einem Deckungsbereich der vom Zugangspunkt bedienten offene Zugangszelle sind, und deren Mobilität wenigstens einen Teil des Deckungsbereichs der Zelle abdeckt.

4. Verfahren nach einem der vorhergehenden Ansprüche, umfassend Erzeugen der zugangszellenspezifischen bevorzugten Nutzerliste durch einen manuellen Vorgang.

5. Verfahren nach einem der Ansprüche 1 bis 3, umfassend Erzeugen der zugangszellenspezifischen bevorzugten Nutzerliste durch einen automatisierten Vorgang, wobei der Vorgang Folgendes umfasst: Überwachen (202) eines Verhaltens von drahtlosen Kommunikationseinheiten, die sich an den Zugangspunkt anhängen, und Auswählen (204) nur der drahtlosen Kommunikationseinheiten, die wenigstens ein vordefiniertes Verhaltenskriterium für Aufnahme in die zugangszellenspezifische bevorzugte Nutzerliste erfüllen.

6. Verfahren nach Anspruch 5, wobei ein Verhalten von drahtlosen Kommunikationseinheiten eines von einer Zeitdauer, während der die eine drahtlose Kommunikationseinheit kontinuierlich am Zugangspunkt angebracht ist, einer Antwort darauf, gerufen zu werden, Ein- und Ausschalten einer drahtlosen Kommunikationseinheit, einer Anzahl von Sitzungen, die von einer drahtlosen Kommunikationseinheit durchgeführt werden, umfasst.

7. Signalverarbeitungsvorrichtung (106) zum Konfigurieren von Betriebsparametern eines Zugangspunktes (103), der konfiguriert ist für ein Bedienen einer offenen Zugangszelle und für ein Bereitstellen von Kommunikationsdiensten für wenigstens einen Nutzer einer drahtlosen Kommunikationseinheit (109, 110), wobei die Signalverarbeitungsvorrichtung **dadurch gekennzeichnet ist, dass** sie für einen Empfang von Messberichten von wenigstens einer innerhalb der bedienenden offenen Zugangszelle vorhandenen drahtlosen Kommunikationseinheit angeordnet ist, Identifizieren der empfangenen Messberichte, die von den drahtlosen Kommunikationseinheiten empfangen worden sind, die von der offenen Zugangszelle bedient werden und die in einer zugangszellenspezifischen bevorzugten Nutzerliste enthalten sind, und Anwenden der identifizierten Messberichte zum Konfigurieren der Betriebsparameter des Zugangspunktes (105).

8. Verarbeitungsmodul (108) zum Kompilieren einer zugangszellenspezifischen bevorzugten Nutzerliste (107), wobei das Verarbeitungsmodul **dadurch gekennzeichnet ist, dass** es für ein Überwachen des Verhaltens von drahtlosen Kommunikationseinheiten (109, 110), die sich an einen Zugangspunkt (103) anhängen, der eine offene Zugangszelle bedient, durch Identifizieren von Messberichten, die von in der offenen zugangszellenspezifischen bevorzugten Nutzerliste enthaltenen drahtlosen Kommunikationseinheiten gesendet worden sind, angeordnet ist, und wobei das Verarbeitungsmodul ferner angeordnet ist, nur die drahtlosen Kommunikationseinheiten auszuwählen, die von der offenen Zugangszelle bedient werden, und die wenigstens ein vordefiniertes Verhaltenskriterium für Aufnahme in die zugangszellenspezifische bevorzugte Nutzerliste erfüllen.

9. Signalverarbeitungsvorrichtung (106) nach Anspruch 7, die in einer oder mehreren integrierten Schaltungen implementiert ist.

10. Verarbeitungsmodul (108) nach Anspruch 8, das in einer oder mehreren integrierten Schaltungen implementiert ist.

11. Drahtloses Kommunikationssystem (100), aufweisend die der Signalverarbeitungsvorrichtung (106) nach Anspruch 7 und Verarbeitungsmodul (108) nach Anspruch 8.

12. Greifbares Computerprogrammprodukt (106) mit einem darauf gespeicherten ausführbaren Computerprogrammcode zum Ausführen durch einen Prozessor, um ein Verfahren nach Anspruch 1 auszuführen.

13. Greifbares Computerprogrammprodukt nach Anspruch 12, umfassend wenigstens eines aus einer Gruppe bestehend aus einer Festplatte, einer CD-ROM, einer optischen Speichereinrichtung, einer magnetischen Speichereinrichtung, einem Nur-Lese-Speicher, einem programmierbaren Nur-Lese-Speicher, einem löschbaren programmierbaren Nur-Lese-Speicher, einem elektrisch löschbaren programmierbaren Nur-Lese-Speicher und einem Flash-Speicher.

## Revendications

1. Procédé (200) pour configurer des paramètres d'exploitation d'un point d'accès (103) pour fournir des services de communications à au moins un utilisateur d'une unité de communication sans fil (109, 110), le procédé comprenant :
la configuration (201) du point d'accès pour desservir une cellule à accès ouvert,
le procédé **caractérisé par** :
le stockage (204) d'une liste d'utilisateurs préférés spécifique à la cellule d'accès,
la réception (205) de rapports de mesure en provenance d'au moins une unité de communication sans fil localisée à l'intérieur de la cellule à accès ouvert de desserte,
l'identification (206) de ces rapports de mesure reçus qui sont reçus en provenance d'unités de communication sans fil qui sont desservies par la cellule à accès ouvert et qui sont incluses dans la liste d'utilisateurs préférés spécifique à la cellule d'accès, et
l'utilisation (207) des rapports de mesure identifiés pour configurer les paramètres d'exploitation du point d'accès.

2. Procédé selon la revendication 1, dans lequel la liste d'utilisateurs préférés spécifique à la cellule d'accès comprend des utilisateurs que le point d'accès est destiné à desservir.

3. Procédé selon la revendication 1, dans lequel la liste d'utilisateurs préférés spécifique à la cellule d'accès comprend des utilisateurs qui sont escomptés être dans une zone de couverture de la cellule à accès ouvert desservie par le point d'accès pendant une période d'activité de point d'accès et dont la mobilité couvre au moins une partie de la zone de couverture de la cellule.

4. Procédé selon l'une quelconque des revendications précédentes, incluant la création de la liste d'utilisateurs préférés spécifique à la cellule d'accès par un processus manuel.

5. Procédé selon l'une quelconque des revendications 1 à 3, incluant la création de la liste d'utilisateurs préférés spécifique à la cellule d'accès par un processus automatisé, ledit processus incluant : la surveillance (202) d'un comportement d'unités de communication sans fil qui se rattachent au point d'accès et la sélection (204) uniquement de ces unités de communication sans fil qui remplissent au moins un critère de comportement prédéfini pour l'inclusion dans la liste d'utilisateurs préférés spécifique à la cellule d'accès.

6. Procédé selon la revendication 5, dans lequel un comportement d'unités de communication sans fil inclut un parmi : une durée pendant laquelle une unité de communication sans fil est rattachée en continu au point d'accès, une réponse à envoyer par radiomessagerie, une mise sous et hors tension d'une unité de communication sans fil, un nombre de sessions effectuées par une unité de communication sans fil.

7. Appareil de traitement de signal (106) pour configurer des paramètres d'exploitation d'un point d'accès (103) configuré pour desservir une cellule à accès ouvert et pour fournir des services de communications à au moins un utilisateur d'une unité de communication sans fil (109, 110), l'appareil de traitement de signal **caractérisé en ce qu'**il est agencé pour recevoir des rapports de mesure en provenance d'au moins une unité de communication sans fil localisée à l'intérieur de la cellule à accès ouvert de desserte, identifier ces rapports de mesure reçus qui sont reçus en provenance d'unités de communication sans fil qui sont desservies par la cellule à accès ouvert et qui sont incluses dans une liste d'utilisateurs préférés spécifique à la cellule d'accès, et utiliser les rapports de mesure identifiés pour configurer les paramètres d'exploitation du point d'accès (105) .

8. Module de traitement (108) pour compiler une liste d'utilisateurs préférés spécifique à la cellule d'accès, (107) le module de traitement **caractérisé en ce qu'**il est agencé pour surveiller un comportement d'unités de communication sans fil (109, 110) qui se rattachent à un point d'accès (103) desservant une cellule à accès ouvert en identifiant des rapports de mesure qui sont envoyés depuis des unités de communication sans fil incluses dans la liste d'utilisateurs préférés spécifique à la cellule à accès ouvert et qui sont utilisés pour configurer le point d'accès, et dans lequel le module de traitement est en outre agencé pour sélectionner uniquement ces unités de communication sans fil qui sont desservies par la cellule à accès ouvert et qui remplissent au moins un critère de comportement prédéfini pour l'inclusion dans la liste d'utilisateurs préférés spécifique à la cellule d'accès.

9. Appareil de traitement de signal (106) selon la revendication 7, mis en oeuvre dans un ou plusieurs circuits intégrés.

10. Module de traitement (108) selon la revendication 8, mis en oeuvre dans un ou plusieurs circuits intégrés.

11. Système de communication sans fil (100) comprenant l'appareil de traitement de signal (106) selon la revendication 7 et le module de traitement (108) selon la revendication 8.

12. Produit de programme informatique tangible (106) sur lequel est stocké un code de programme informatique exécutable pour l'exécution par un processeur pour effectuer un procédé conformément à la revendication 1.

13. Produit de programme informatique tangible selon la revendication 12, comprenant au moins un d'un groupe constitué par : un disque dur, un CD-ROM, un dispositif de stockage optique, un dispositif de stockage magnétique, une mémoire morte, une mémoire morte programmable, une mémoire morte programmable effaçable, une mémoire morte programmable effaçable électriquement et une mémoire Flash.
